## Europäisches Patentamt
## European Patent Office
## Office européen des brevets

(11) Publication number: **0 018 810**
A1

# EUROPEAN PATENT APPLICATION

(21) Application number: **80301387.9**

(22) Date of filing: **28.04.80**

(51) Int. Cl.³: **C 25 B 1/04**
**C 25 B 9/04, C 25 B 15/02**

(30) Priority: **30.04.79 GB 7914972**
**14.11.79 GB 7939344**

(43) Date of publication of application:
**12.11.80 Bulletin 80/23**

(84) Designated Contracting States:
**AT CH DE FR IT LI NL SE**

(71) Applicant: **Spirig, Ernst**
**P.O.Box 160 Speerstrasse 14**
**CH-8640 Rapperswil(CH)**

(72) Inventor: **Spirig, Ernst**
**P.O.Box 160 Speerstrasse 14**
**CH-8640 Rapperswil(CH)**

(74) Representative: **Hodding, Henry Squarey et al,**
**A.A. THORNTON & CO. Northumberland House 303-306**
**High Holborn**
**London, WC1V 7LE(GB)**

(54) Electrolysis apparatus and method of operating an electrolysis apparatus.

(57) In an electrolysis apparatus (10), a D.C. electrical supply (17) is connected between two electrodes (11) (to establish an electrical path through the electrolyte) by way of a change-over switch (18) which serves for periodically reversing the polarity connections of the D.C. supply (17) to the electrodes (11). Deposits which build up on one electrode (11) are very rapidly removed when the polarity is reversed.

Croydon Printing Company Ltd.

0018810

- 1 -

ELECTROLYSIS APPARATUS

This invention relates to electrolysis apparatus, particularly for the electrolysis of water, either to form detonating gas (oxyhydrogen gas), or to form oxygen and hydrogen separately at respective outputs of the apparatus.

In electrolysis apparatus in which a D.C. supply is connected between two electrodes of the apparatus, deposits are found to build up on one of the electrodes, whilst the other electrode remains relatively clean. Such deposits introduce an additional electrical resistance in series in the flow path of current through the cell, and limits the current flow at a given D.C. voltage applied to the cell. Alternatively, if the current level is to be maintained, an increased D.C. voltage is required. In the case particularly of detonating gas generators, the effect is especially prevalent with arrangements comprising 10 or more cells in series. A 50 cell generator might commence with a 105 volt D.C. supply to provide a required current density, and require an increase to 120 volts after about 100 hours in order to maintain that current density (an increase of about 14%). After about 200 hours the deposit is such as to limit the current flow and a further increase in voltage is not able to return the current to its required density.

It has been a practice to add certain salts and

- 2 -

additives to the electrolytic solution, in order to reduce the deposits. Such additives may slow the formation of the deposits, but do not prevent them. Such additives (for example vanadium pentoxide) can be very costly.

In accordance with this invention, there is provided a method of operating an electrolysis apparatus, comprising periodically reversing the polarity connections of a D.C. supply to respective electrodes of the apparatus.

Also in accordance with this invention, there is provided an electrolysis apparatus comprising a D.C. supply connected between two electrodes of the apparatus, and means for periodically reversing the polarity connections of the D.C. supply to those electrodes.

The change in polarity causes very rapid removal of the deposits which have built up on the one electrode of the or each cell of the apparatus, and indeed the original current density is restored within a few minutes after the polarity change. The deposits then build up gradually on the other electrode of the or each cell, until the polarity is changed again, and so on.

The invention is applicable to apparatus comprising a plurality of cells, or only a single cell, and is applicable to detonating gas generators and to apparatus for electrolysing water to produce hydrogen and oxygen at respective outputs of the apparatus. The polarity reversal may be effected by mechanical or electronic switches, and may be initiated manually, or automatically. For example the change-over switch may be coupled to an on/off switch which connects the D.C. supply to an A.C. energising supply, so that switching is effected each time the apparatus is switched on or off. Alternatively, an ampere-hour meter may effect the switching after a predetermined ampere-hour figure is reached, or a sensor may respond to the voltage across one or more cells exceeding a threshold, or to the current value falling below a threshold.

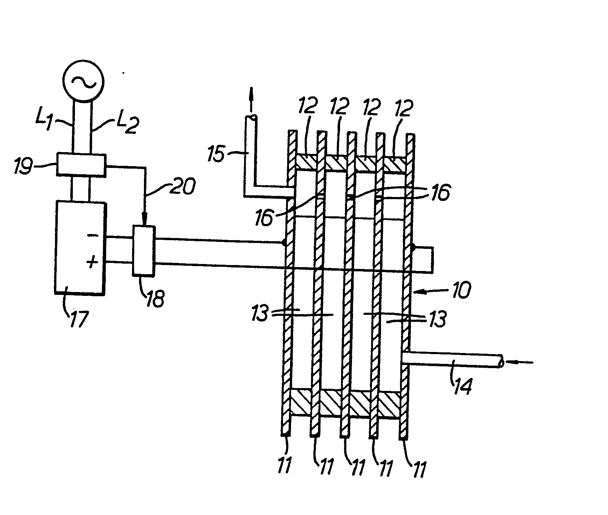

An embodiment of the invention will now be described, by way of example only, with reference to the accompanying drawing, which is a schematic diagram of a detonating gas generator in accordance with this invention.

Referring to the drawing, there is shown a detonating gas generator 10 having a plurality of parallel electrodes 11, with circular spacers 12 between them to form a closed cell 13 between each adjacent pair of such electrodes. An inlet pipe 14 for fresh electrolyte communicates with one end cell adjacent its bottom and an outlet pipe 15 for the generated detonating gas communicates with the opposite end cell adjacent its top. Apertures 16 for the flow of electrolyte (and of detonating gas) from cell-to-cell (in the direction from the inlet cell to the outlet cell) are provided in the intermediate electrodes near the tops of the cells. The generator is more fully described in my British patent British patent application 7914972.

A D.C. supply 17 receives electrical energy over lines $L_1, L_2$ from an A.C. source and provides a D.C. voltage at its output terminals (+ and - as shown), which are connected through a change-over switch 18 to the respective outer electrodes of the gas generator. In this embodiment, an on/off switch 19, connected in the lines $L_1, L_2$ from the A.C. supply to the D.C. supply, serves for manually switching on and switching off the apparatus, and each time it is switched on (or off), switch 19 reverses change-over switch 18 by its coupling 20.

Instead, the change-over switch 18 may be actuated manually at intervals of time determined by the operator. Alternatively, an ampere-hour meter may be coupled to the apparatus to effect switching after a predetermined ampere-hour figure is reached, or a sensor may be provided to respond to the voltage across anyone or a number or all

- 4 -

cells exceeding a threshold (or to the current falling below a threshold). The change-over switch 18 may be a mechanical switch or a relay, or it may comprise an electronic switch (comprising triacs or thyristors, for example).

In the case of an apparatus for the electroylis of water and generating oxygen and hydrogen at separate outlets, then in large systems means will be necessary for flushing out the gas-containing volumes with an inert gas (for example nitrogen) before the polarity reversal is completed. In small systems, for example for laboratory use, this flushing out is not needed because the volumes of gas are too small. In either case, valves may be required to route the oxygen and hydrogen from whichever electrodes are relevant, at a given time, to always the same outlets, the (for example electrical) valves being coupled to the change-over switch in order to change-over the routing of the gases.

The polarity reversal causes the deposits to more or less crack away from the electrodes and the residues of the deposits are flushed out, with the electrolyte, from the cells. Removal of the deposits in this way is an important factor for reducing service cleaning of the apparatus, in addition to the advantages already mentioned.

CLAIMS

1.      An electrolysis apparatus, comprising a
vessel for electrolyte, at least two electrodes for
establishing an electrical current through the electrolyte,
a D.C. electrical supply connected between the two
electrodes, and means for periodically reversing the
polarity connections of the D.C. supply to those electrodes.

2.      An electrolysis apparatus as claimed in claim 1,
in which the D.C. supply is connectable to an A.C.
energising supply by an on/off switch, and in which said
polarity reversing means comprises a change-over switch
which is changed over each time said switch is switched
to one of its on and off states.

3.      An electrolysis apparatus as claimed in claim 1,
in which said reversing means comprises an ampere-hour
meter and a change-over switch which is changed over
in response to a predetermined measurement by the
ampere-hour meter since the previous change-over.

4.      An electrolysis apparatus as claimed in claim
1, in which said reversing means comprises a sensor
provided for a cell of the apparatus and a change-over
switch which is changed over in response to the
voltage across said cell exceeding a threshold, or to
the current through said cell falling below a threshold.

5.      An electrolysis apparatus as claimed in claim
1, in which said reversing means comprises a manually
operable change-over switch.

- 6 -

6.        An electrolysis apparatus as claimed in any preceding claim, arranged for the generation of detonating gas.

7.        An electrolysis apparatus as claimed in any one of claims 1 to 5, for the electrolysis of water and having separate outlets for the generated oxygen and hydrogen, and comprising valve means changing over with the reversing means so that the oxygen and hydrogen are always directed to the same respective outlets.

8.        An electrolysis apparatus as claimed in claim 7, comprising means for flushing out the gas-containing volumes of the apparatus with inert gas before each polarity reversal is completed.

9.        An electrolysis apparatus substantially as herein described with reference to the accompanying drawings.

10.        A method of operating an electrolysis apparatus, comprising periodically reversing the polarity connections of a D.C. supply to respective electrodes of the apparatus.

1/1

0018810

## European Patent Office

## EUROPEAN SEARCH REPORT

Application number

EP 80301387.9

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| X | <u>DE - A1 - 2 416 993</u> (HARTKORN) <br> + Claims 3-6; fig. 1 + <br> -- | 1,2,7, 10 | C 25 B 1/04 <br> C 25 B 9/04 <br> C 25 B 15/02 |
| A | <u>DE - A1 - 2 810 528</u> (INOUE-JAPAX <u>RESEARCH INC.</u>) <br> + Claim 1 + <br> -- | 1 | |
| X | <u>CH - A - 257 714</u> (OERLIKON) <br> + Page 1, lines 1-19; claim; page 1, lines 28-33; page 2, lines 27-31 + <br> -- | 1,3,4, 6,10 | **TECHNICAL FIELDS SEARCHED (Int.Cl. ³)** |
| X | <u>US - A - 2 951 802</u> (WHITE) <br> + Claim 1; column 3, lines 63-75; column 4, lines 1-43; fig. 2 + <br> -- | 1,5,7, 10 | C 25 B |
| X | <u>US - A - 3 216 919</u> (WHITE) <br> + Claim 1; column 3, lines 48-73 + <br> ---- | 1,10 | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims |
|---|---|

| Place of search | Date of completion of the search | Examiner |
|---|---|---|
| VIENNA | 21-07-1980 | PILLERSTORFF |

EPO Form 1503.1 06.78